# EUROPEAN PATENT SPECIFICATION

(11) **EP 3 950 553 B1**
(45) Date of publication and mention of the grant of the patent: **12.03.2025**
(21) Application number: 21186349.3
(22) Date of filing: 19.07.2021
(51) Int. Cl.: B65H 67/06

(54) **METHOD FOR DETECTING PRESENCE AND/OR TRACKING OF A BOBBIN-HOLDER PLATE IN A WINDING MACHINE OR RING SPINNING MACHINE, BOBBIN HOLDER PLATE FOR WINDING MACHINE OR RING SPINNING MACHINE AND APPARATUS FOR DETECTING PRESENCE AND/OR TRACKING OF A BOBBIN IN A WINDING MACHINE OR RING SPINNING MACHINE**
VERFAHREN ZUM ERKENNEN DER ANWESENHEIT UND/ODER NACHFÜHRUNG EINER SPULENHALTERPLATTE IN EINER SPULMASCHINE ODER RINGSPINNMASCHINE, SPULENHALTERPLATTE FÜR EINE SPULMASCHINE ODER RINGSPINNMASCHINE SOWIE VORRICHTUNG ZUR ERKENNUNG DER ANWESENHEIT UND/ODER NACHFÜHRUNG EINER SPULE IN EINER SPULMASCHINE ODER RINGSPINNMASCHINE
PROCÉDÉ DE DÉTECTION DE PRÉSENCE ET/OU DE SUIVI D'UNE PLAQUE PORTE-BOBINE DANS UNE MACHINE D'ENROULEMENT OU UNE MACHINE DE FILATURE À ANNEAUX, PLAQUE PORTE-BOBINE POUR MACHINE D'ENROULEMENT OU MACHINE DE FILATURE À ANNEAUX ET APPAREIL DE DÉTECTION DE PRÉSENCE ET/OU DE SUIVI D'UNE BOBINE DANS UNE MACHINE D'ENROULEMENT OU UNE MACHINE DE FILATURE À ANNEAUX

(30) Priority: 03.08.2020 IT 202000018940
(43) Date of publication of application: 09.02.2022
(73) Proprietor: Savio Macchine Tessili S.p.A., 33170 Pordenone (IT)
(72) Inventor: MARASCIUTTI, Mario, I-33170 PORDENONE (IT); OSS NOSER, Massimo, I-33170 PORDENONE (IT); DALLA BONA, Luca, I-33170 PORDENONE (IT)
(74) Representative: Mitola, Marco

(56) References cited:
- US-A- 5 287 692
- US-A- 5 297 671
- US-A- 5 402 951
- US-A- 5 497 952

## Description

### FIELD OF APPLICATION

The present invention relates to a method for detecting presence and/or tracking of a bobbin-holder plate with RFID tags in a winding machine or ring spinning machine having at least one RFID sensor, a bobbin-holder plate with RFID tags for a winding machine or ring spinning machine, and a bobbin presence and/or tracking apparatus in a winding machine or ring spinning machine comprising said bobbin-holder plate with RFID tags and a related RFID sensor for detecting and tracking the presence and status of said bobbin-holder plate.

### STATE OF THE ART

Winding machines, particularly automated winding machines, comprise a plurality of winding units to which bobbins are to be conveyed/fed. The bobbins are fed by means of a plate onto which the bobbins are loaded by means of an automation system which may be part of the winder or of at least one of the machines related to the processes upstream thereof.

The bobbins, on board the plate, before being sent to the winding units, must be suitably prepared so that they may be automatically processed by the winding units themselves: for this reason, there are automation stations upstream of all the winding units that allow the free end to be captured from the bobbin and positioned in a predefined and easy-to-capture position for said unit.

There is therefore the need to detect the presence of the plate in different positions of the automation and in said winding unit: in the current winding machines, the most commonly used solutions involve the use of sensors that detect the presence of the plate based on an optical principle (reflection or barrier photocells), capacitive or ultrasonic solutions, or toggle systems with Hall or inductive sensors.

Each of these technologies has its own critical points for specific use on textile machines, such as dirt, sensitivity, which changes greatly depending on environmental conditions, immunity to compressed air discharges (with which textile machines are equipped), or the complexity that may result from the use of toggle solutions. Cited prior art solutions are disclosed, for example, by US 5287692 A, US 5297671 A and US 5497952 A.

### DISCLOSURE OF THE INVENTION

Thus, there is a need to resolve the cited drawbacks and limitations with reference to the prior art.

In particular, there is a need felt in the art to be able to reliably track the passage of a bobbin with its associated bobbin-holder plate within an automated winding machine.

This requirement is satisfied by a presence detection method and/or tracking of a bobbin-holder plate according to claim 2 and by a bobbin-holder plate according to claim 1.

### DESCRIPTION OF THE DRAWINGS

Further features and advantages of the present invention will be more readily understood from the following description of its preferred and non-limiting embodiments, wherein:
Fig. 1 depicts a cross-sectional view of a bobbin-holder plate according to one embodiment of the present invention;
Fig. 2 depicts a cross-sectional view of a bobbin-holder plate according to a further embodiment of the present invention;
Fig. 3 depicts a cross-sectional view of the enlarged detail III of Fig 2;
Fig. 4 depicts a plan view of an RFID tag sensor according to an embodiment of the present invention;
Fig. 5 depicts a plan view of an RFID tag sensor according to a further embodiment of the present invention;

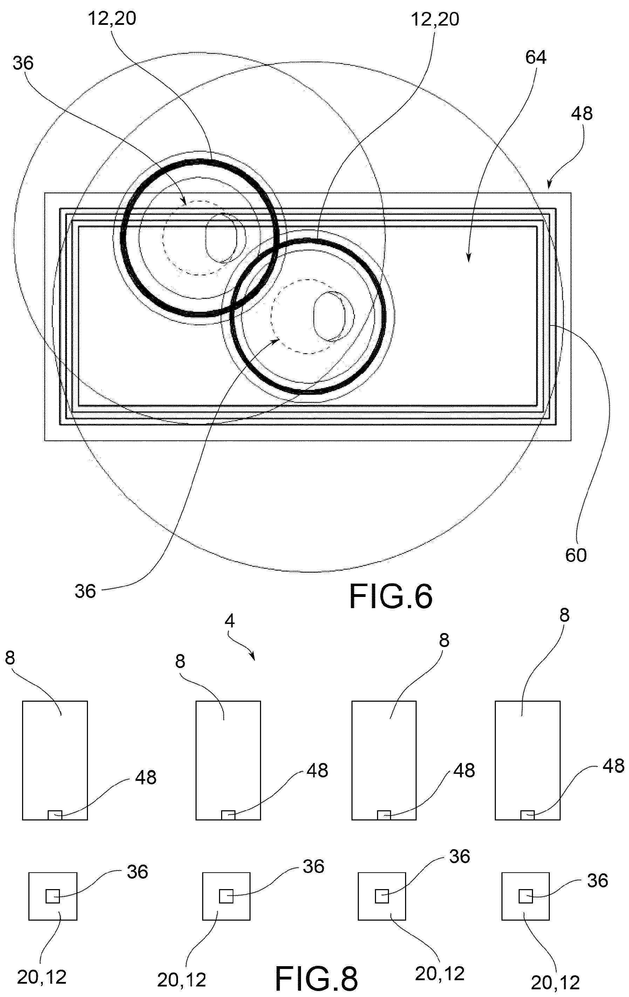

Fig. 6 depicts a plan view of an RFID tag sensor according to a further embodiment of the present invention;

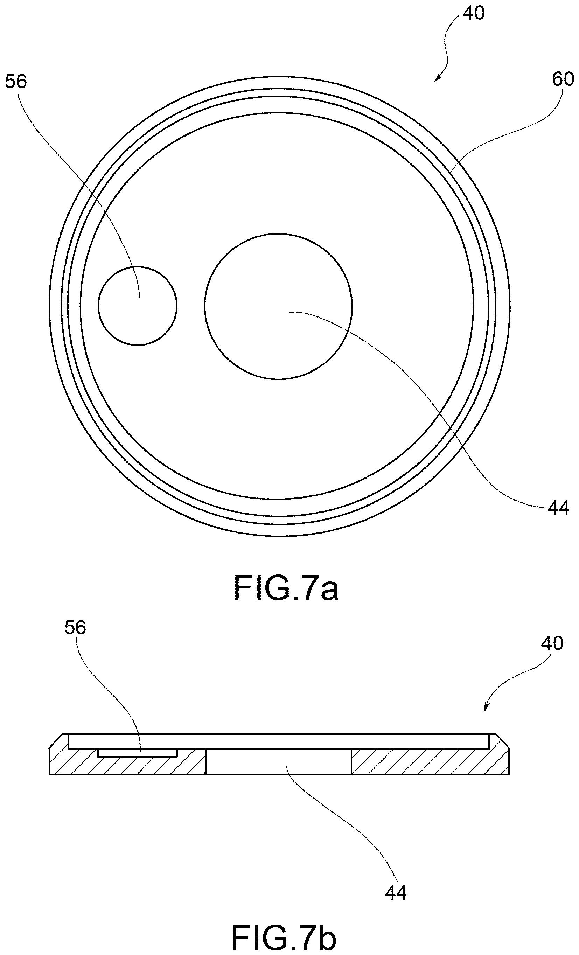

Fig. 7a-7b depict, respectively, a plan and cross-sectional view of a cap for a bobbin-holder plate according to an embodiment of the present invention;
Fig. 8 depicts a schematic view of an automated winding machine according to an embodiment of the present invention.

Elements or parts of elements common to the embodiments described hereinafter will be provided with the same reference numbers.

### DETAILED DESCRIPTION

With reference to the aforesaid figures, the reference 4 has been used to indicate globally an overall schematic view of a winding machine, preferably of the automated type, or a ring spinning machine.

The winding machine 4 comprises a plurality of winding units or heads 8, in a known manner, equipped with devices suitable to wind bobbins 12.

The bobbins 12, in a known manner, are reels of thread/yarn wound about a related hollow tube 16, which is sent to the winding heads 8 to be unwound and analyzed with any defects eliminated. The thread/yarn with its defects eliminated is rewound on a bobbin, in order to be sent to further machines for any further processing, such as dyeing, weaving, and the like.

The bobbins 12 are supported by a special bobbin holder 20 for automated winding machines 4.

In particular, the bobbin-holder plate 20 comprises a plate body 24 having a base 26 and a central pin 28, provided with a first central through-hole 32, configured to accommodate and support an associated bobbin 12.

More specifically, the center pin 28 is configured to be accommodated within the tube 16 of the bobbin 12. In this way, the bobbin 12 is supported by the central pin 28 of the bobbin-holder plate so as to be perpendicular to the base 26 of said bobbin-holder plate.

The first central hole 32 also passes through the base 26 of the spool-holder plate 20: in this way a jet of compressed air sent from the bottom of the base 26, i.e., from the side opposite the central pin 28, may pass through the central pin 28 and escape into the tube 16 so as to intercept an end of the bobbin 12, whereby said bobbin may be recuperated and picked up for subsequent winding operations.

The bobbin-holder plate 20 comprises at least one RFID tag 36 associated with the plate body 24 whereby a position and/or status of the bobbin 12 may be tracked, wherein said RFID tag 36 contains information for the identification of the associable bobbin 12.

In accordance with a possible embodiment, the RFID tag 36 is embedded in the spool holder plate 20 by co-molding.

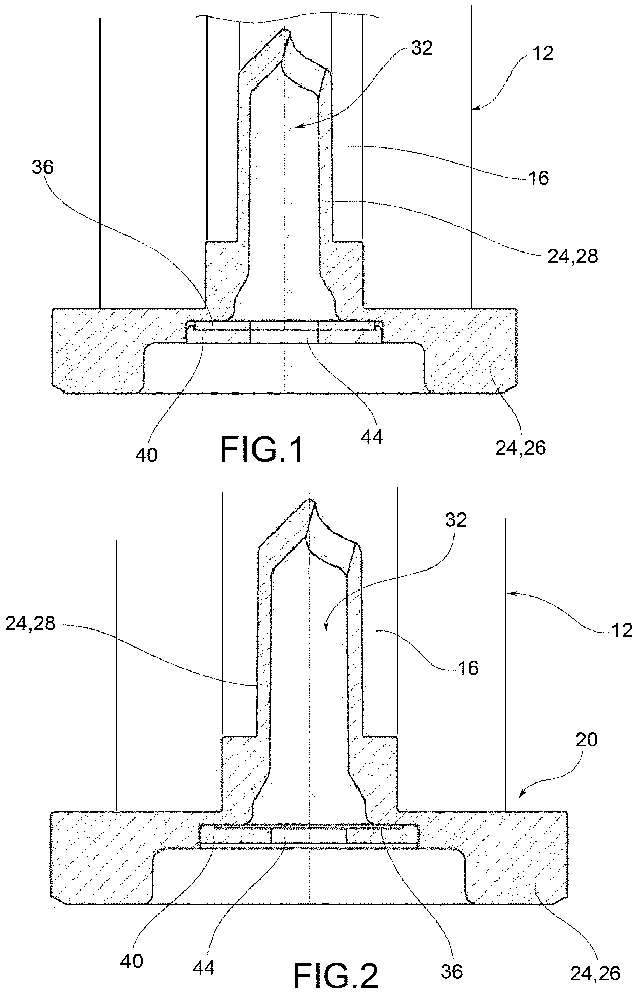

The RFID tag 36 is fixed to the spool-holder plate 20 by means of a fixing cap 40 associated with the plate body 24 (Fig. 1).

According to a further possible embodiment, a fixing cap 40 provided with said RFID tag 36 and associated with the plate body (Fig. 2) is provided.

The fixing cap 40 is associated with the base 26 of the plate body 24 and is provided with a second through-hole 44 coaxial with said central pin 28 and in fluid connection with said first central through-hole 32. In this way, the jet of compressed air sent from the side of the base 26 may pass through both the fixing cap 40 and the center pin 28 so as to intercept the yarn end of the bobbin 12.

According to a possible embodiment, said RFID tag 36 is a passive RFID tag in HF (RO type, i.e., read-only, or readable and rewritable R/W type) and is also used for the smart management of the flow of plates and/or bobbins along the machine and to track the qualitative information of the bobbin and yarn being processed on said winding machine.

The present invention also relates to an apparatus for detecting the presence and/or tracking of a bobbin 12 in an automated winding machine 4 comprising at least one bobbin-holder plate 20 having an RFID tag 36 (described above) and at least one RFID sensor 48 for detecting and tracking the presence and status of the bobbin-holder plate 20 by reading said RFID tag 36.

In other words, the RFID sensor 48 acts as an antenna capable of detecting the presence of an RFID tag 36 associated with the bobbin-holder plate 20 and, possibly, reading and/or writing information to said RFID tag 36, as more fully described below.

According to a possible embodiment, said RFID sensor 48 for detecting the presence of an RFID tag 36 has an ON/OFF-type output signal so as to detect the presence/absence of said RFID tag 36.

For example, the RFID sensor 48 comprises a detection antenna 52 configured to detect said RFID tag 36, and an electronic detection circuit 56 configured to power the detection antenna 52 on an operating frequency of said RFID tag 36.

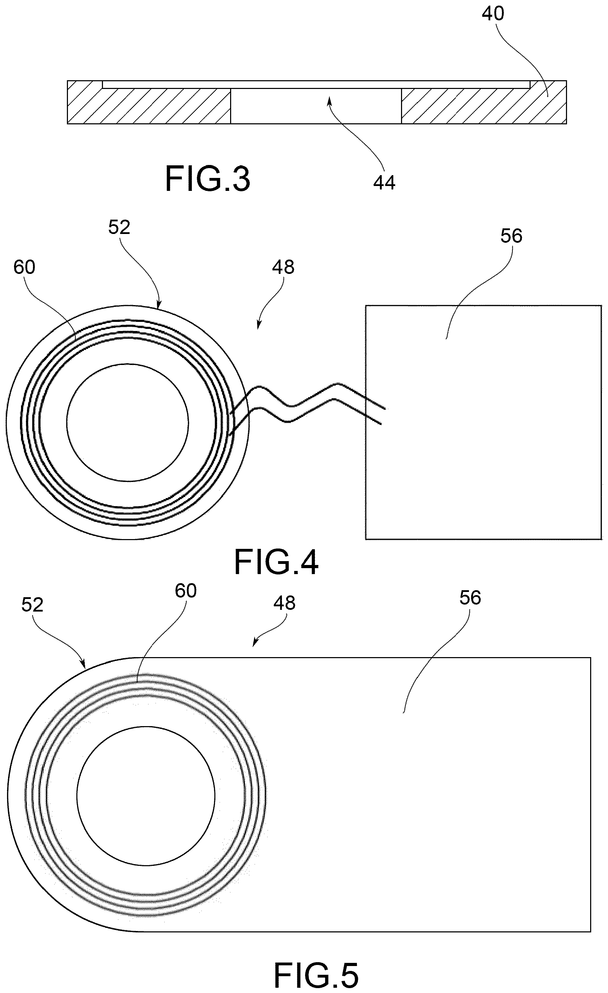

Said detection antenna 52 and said electronic detection circuit 56 may be implemented in two separate PCBs and interconnected to each other via a cable or board-to-board connectors (Fig. 4).

It is also possible for the RFID sensor 48 to comprise a detection antenna 52 and an electronic detection circuit 56 integrated with each other and fabricated in a single PCB (Fig. 5).

For example, said detection antenna 52 comprises "n" coils 60, arranged on a PCB or a reel, configured to define the perimeter of a detection area 64 within which the passage and/or presence of said RFID tag 36 and associated bobbin-holder plate 20 is detected.

Said coils 60 are preferably made of copper and/or aluminum.

As mentioned, the RFID sensor 48 is configured to be able to read the passage and thus the presence of an RFID tag, particularly when using a read-only tag (RO, i.e., non-rewritable).

In particular, it is possible for the RFID sensor 48 to read an ON/OFF-type signal upon passage of at least one bobbin-holder plate 20 within said detection area 64. In this case, the ON/OFF-type signal is limited to providing an indication/information of presence (or positive detection) or absence (or failed detection) of an RFID tag 36 with a related bobbin-holder plate 20. In other words, the RFID sensor 48 detects the presence of the RFID tag 36 on board the bobbin-holder plate 20 and generates an ON/OFF-type electrical signal as output of said sensor: it is therefore an RFID sensor 48 that replaces the photocells or mechanical feeler probes used in the solutions of the prior art, overcoming all the related technical problems and limitations of use, especially in relation to the dusty and dirty environment of textile machines.

It is also possible to provide for the RFID tag 36 to contain additional and more detailed information regarding, for example, the origin of the bobbin 12, the number of processing performed thereon, and the winding head to which it has been subjected. In this case, it is possible that the RFID tag 36 may be rewritten and/or updated from time to time by the RFID sensors with which it dialogs within the winding machine 4.

To this end, the winding machine 4 may comprise a plurality of RFID sensors 48 arranged in distinct work areas of said automated winding machine so as to track the passage of at least one bobbin-holder plate 20 through said work areas and, preferably, to update the accumulated information of the RFID tag 36 as said passage evolves.

According to a further embodiment, a rewritable (R/W) RFID tag 36 is used and, accordingly, the RFID sensor 48 is configured to read and/or write information contained in the RFID tag 36 of the bobbin-holder plate 20.

The operation of a bobbin-holder plate and ring spinning or winding machine according to the present invention will now be described.

In particular, the method for detecting the presence and/or tracking of at least one bobbin 12 supported by a bobbin-holder plate 20 comprises the steps of:
providing a bobbin 12 on a bobbin-holder plate 20 as described above,
providing at least one RFID sensor 48 for detecting and tracking the presence and status of the bobbin-holder plate 20 by reading said RFID tag 36,
tracking the presence and/or passage of said bobbin-holder plate 20, in a winding machine 4, by means of said at least one RFID sensor 48.

The RFID sensor 48 is as shown divided into two functional parts, namely the detection antenna 52 and the electronic detection circuit 56.

The detection antenna 52 preferably comprises "n" coils 60 (on a PCB or in a reel), the shape and size of which are related to the detection area 64 needed for the application and the detection sensitivity.

The electronic detection circuit 56 generates the signal necessary to power the detection antenna 52 at the operating frequency of said RFID tag 36.

As soon as an RFID tag 36 enters the detection area 64, i.e., the area covered by the detection antenna 52, it powers itself by coupling with this antenna and starts modulating the signal generated by the electronic detection circuit 56; this modulation is detected and subsequently an output signal is generated, for example of the ON/OFF type, to indicate the entry of an RFID tag 36 into said detection area 64. As soon as the signal modulation disappears (and thus the RFID tag 36 exits the detection area 64 of the detection antenna 52), the output signal is returned to the rest signal (OFF) indicating that no RFID tag 36 is present in the detection area.

As shown, the method for detecting presence and/or tracking of at least one bobbin 12 supported by a bobbin-holder plate 20 of the present invention may also comprise the steps of providing RFID sensors 48 capable of reading and/or writing information contained in the RFID tag 36 of the bobbin-holder plate 20, reading and updating the information of said RFID tag 36, via said RFID sensors 48, as the RFID tag 36 passes through different areas of the winding machine monitored by said RFID sensors 48.

The step of presence detection and/or tracking, but also of updating the information contained in said RFID tag 36, is certainly useful not only to reconstruct the history of each bobbin 12 but also to identify, for example, any critical issues relating to specific areas/positions of the winding machine.

As may be appreciated from that which is described above, this invention overcomes the drawbacks of the prior art.

In particular, the present invention allows a bobbin-holder plate to be provided equipped with an RFID tag that is also used for the smart management of the flow of the plates and/or bobbins along the machine and to track the qualitative information of the bobbin and the yarn being processed on said winding machine.

The present solution, unlike the solutions of the prior art, is not affected by unfavorable environmental conditions typical of winding machines, such as dirt, sensitivity, compressed air discharges, or vibrations. Therefore, the solution according to the present invention is significantly more reliable and precise than known solutions and is totally immune to the dirt typical of textile environments.

Moreover, the plate may be effectively monitored throughout its path inside and near the winding machine: in this way, it is possible to detect any problem in real time and/or to reconstruct the history of each plate and the bobbin thereof also in order to perform preventive maintenance operations.

In addition, the size and shape of the detection antenna connected to the RFID sensor allow for sensors to switch their output based on the function they need to perform and/or the location where they may be placed.

The present invention enables the implementation of a plate-holder presence sensor that detects the RFID tag with distances from the detection antenna of up to 10 cm (related to the shape of the detection antenna and/or the number of antenna coils).

The antennas may be placed under the machine belts or under the drive belt of the plate in the automation part, making it possible to create a wiring harness for the automation part that is hidden and protected during the cleaning operations that are carried out periodically by the operators.

This RFID sensor may be integrated into appropriate machine mounts to facilitate and protect the wiring of the machine.

Moreover, as seen, the RFID sensor is insensitive to dirt (dust and yarn residues) and to compressed air blasts generated in the automation of the winding machine.

By means of this architecture, a sensor may be developed with a suitably extended detection zone that also allows the detection of plates with different diameters.

In addition, it is possible to implement an RFID sensor that identifies the bobbin-holder plate uniquely and independently of its diameter. This means that the sensors do not have to be modified according to the type of plate used, as is the case, for example, with the feeler probes of the solutions of the prior art.

In addition, since the HF tag is a very economical solution (compared to the LF solution), it may be used as standard with advantages for the end users.

The RFID tag may also be used to store information relating to the quality of the bobbin on board and, by means of tag readers, to manage the bobbin flow appropriately.

A person skilled in the art, for the purpose of satisfying contingent and specific needs, may make numerous modifications and variations to the above-described solutions, within the scope of the invention as defined by the following claims.

## Claims

1. A bobbin-holder plate (20) for automated winding machines (4) or ring spinning machines comprising:
- a plate body (24) with a base (26) and a central pin (28) having a first central through-hole (32) configured to house and support an associable bobbin (12),
- at least one RFID tag (36), associated to the plate body (24), in order to allow a position and/or a state of the bobbin (12) to be tracked, wherein said RFID tag (36) contains information for the identification of the associable bobbin (12),
**characterized in that** said RFID tag (36) is fixed onto the bobbin-holder plate (20) by means of a fixing cap (40) associated with the plate body (24) wherein said fixing cap (40) is associated with the base (26) of the plate body (24) and is provided with a second through-hole (44) coaxial with said central pin (28) and in fluidic connection with said first central through-hole (32).

2. Method for detecting the presence and/or tracking at least one bobbin (12) supported by a bobbin-holder plate (20) comprising the steps of:
- providing a bobbin (12) on a bobbin-holder plate (20) according to claim 1,
- providing, in a detection area (64), at least one RFID sensor (48) to detect and track the presence and the status of the bobbin-holder plate (20) by reading said RFID tag (36),
- detecting the presence and/or passage of said bobbin-holder plate (20), in a winding machine (4) or in a ring spinning machine, by means of said at least one RFID sensor (48) which detects the presence of said RFID tag (36) when it passes near the RFID sensor (48).

3. The method of detecting the presence and/or tracking at least one bobbin (12) supported by a bobbin-holder plate (20) according to claim 2, comprising the steps of:
- providing at least one RFID tag (36) of the rewritable type,
- providing at least one RFID sensor (48) able to read and/or write the information contained in the RFID tag (36) of the bobbin-holder plate (20),
- reading and updating the information of said RFID tag (36), by means of said at least one RFID sensor (48), at the passage of the RFID tag (36) through different detection areas (64) of the winding machine (4) or ring spinning machine monitored by at least one RFID sensor (48).

4. An apparatus for presence detection and/or bobbin tracking (12) in a winding machine (4) or in a ring spinning machine comprising at least one bobbin-holder plate (20) with RFID tag (36) according to claim 1, and at least one RFID sensor (48) to detect and track the presence and status of the bobbin-holder plate (20) by reading said RFID tag (36).

5. The apparatus (12) according to claim 4, wherein said RFID sensor (48), for detecting the presence of an RFID tag (36), presents an ON/OFF-type output signal in order to detect the presence/absence of the RFID tag (36).

6. The apparatus (12) according to claim 4 or 5, wherein said RFID sensor (48) comprises a detection antenna (52), configured to detect said RFID tag (36), and an electronic detection circuit (56) configured to power the detection antenna (52) on an operating frequency of said RFID tag (36).

7. The apparatus (12) according to claim 6, wherein said detection antenna (52) and said electronic detection circuit (56) are made of two separate PCBs interconnected with each other by means of a cable or board-to-board connectors.

8. The apparatus (12) according to claim 6, wherein the RFID sensor (48) comprises a detection antenna (52) and an electronic detection circuit (56) integrated with each other and made in a single PCB.

9. The apparatus (12) according to any of the claims from 6 to 8, wherein said detection antenna (52) comprises 'n' coils (60), arranged on a PCB or on a reel, configured to define the perimeter of a detection area (64) inside of which the passage and/or presence of said RFID tag (36) and the related bobbin-holder plate 20 is detected.

10. The apparatus (12) according to claim 9, wherein said coils (60) are made of copper and/or aluminum.

11. The apparatus (12) according to any of the claims from 4 to 10, wherein said RFID sensor (48) is configured to read and/or write the information contained in the RFID tag (36) of the bobbin-holder plate (20) and wherein said RFID tag (36) is of the rewritable type.

12. An automated winding machine (4) comprising at least one winding unit or winding head (8), configured to wind bobbins (12) fed to it by at least one bobbin-holder plate (20) according to claim 1, and at least one presence detection and/or tracking apparatus of a bobbin according to any of the claims from 4 to 11.

13. The automated winding machine (4) according to claim 12, comprising a plurality of RFID sensors (48), arranged in separate working areas of said winding machine (4) so as to track the passage of at least one bobbin-holder plate (20) through said work areas.

14. A ring spinning machine comprising at least one spinning head and RFID sensors for tracking the passage and feeding of bobbin-holder plates (20) according to claim 1, and at least one presence detection and/or tracking apparatus of a bobbin according to any of the claims from 4 to 11.

## Patentansprüche

1. Spulenhalterplatte (20) für automatische Wickelmaschinen (4) oder Ringspinnmaschinen, umfassend:
- einen Plattenkörper (24) mit einer Basis (26) und einem zentralen Stift (28), der ein erstes zentrales Durchgangsloch (32) aufweist, das konfiguriert ist, eine zuordenbare Spule (12) aufzunehmen und zu stützen bzw. zu tragen,
- zumindest ein RFID-Tag (36), das dem Plattenkörper (24) zugeordnet ist, um die Verfolgung einer Position und/oder eines Status der Spule (12) zu ermöglichen, wobei das RFID-Tag (36) Informationen für die Identifizierung der zuordenbaren Spule (12) enthält,
**dadurch gekennzeichnet, dass** das RFID-Tag (36) mittels einer Fixier- bzw. Befestigungskappe (40), die dem Plattenkörper (24) zugeordnet ist, auf der Spulenhalterplatte (20) fixiert bzw. befestigt ist, wobei die Fixierkappe (40) der Basis (26) des Plattenkörpers (24) zugeordnet ist und mit einem zweiten Durchgangsloch (44) versehen ist, das koaxial zu dem zentralen Stift (28) und in Fluidverbindung mit dem ersten zentralen Durchgangsloch (32) ist.

2. Verfahren zum Detektieren der Anwesenheit und/oder Verfolgung von zumindest einer Spule (12), die durch eine Spulenhalterplatte (20) gestützt bzw. getragen ist, umfassend die Schritte:
- Bereitstellen einer Spule (12) an einer Spulenhalterplatte (20) nach Anspruch 1,
- Bereitstellen, in einem Detektionsbereich (64), von zumindest einem RFID-Sensor (48) zum Detektieren und Verfolgen der Anwesenheit und des Status der Spulenhalterplatte (20) durch Lesen des RFID-Tags (36),
- Detektieren der Anwesenheit und/oder des Durchgangs der Spulenhalterplatte (20) in einer Wickelmaschine (4) oder in einer Ringspinnmaschine mittels des zumindest einen RFID-Sensors (48), der die Anwesenheit des RFID-Tags (36) detektiert, wenn dieses in der Nähe des RFID-Sensors (48) vorbeiläuft.

3. Verfahren zum Detektieren der Anwesenheit und/oder Verfolgung von zumindest einer Spule (12), die durch eine Spulenhalterplatte (20) gestützt bzw. getragen ist, nach Anspruch 2, umfassend die Schritte:
- Bereitstellen von zumindest einem RFID-Tag (36) vom wiederbeschreibbaren Typ,
- Bereitstellen von zumindest einem RFID-Sensor (48), der in der Lage ist, die in dem RFID-Tag (36) der Spulenhalterplatte (20) enthaltenen Informationen zu lesen und/oder zu schreiben,
- Lesen und Aktualisieren der Informationen des RFID-Tags (36) mittels des zumindest einen RFID-Sensors (48) beim Durchgang des RFID-Tags (36) durch unterschiedliche Detektionsbereiche (64) der Wickelmaschine (4) oder Ringspinnmaschine, die von zumindest einem RFID-Sensor (48) überwacht werden.

4. Vorrichtung zur Anwesenheitsdetektion und/oder Spulenverfolgung (12) in einer Wickelmaschine (4) oder in einer Ringspinnmaschine, umfassend zumindest eine Spulenhalterplatte (20) mit RFID-Tag (36) nach Anspruch 1, und zumindest einen RFID-Sensor (48) zum Detektieren und Verfolgen der Anwesenheit und des Status der Spulenhalterplatte (20) durch Lesen des RFID-Tags (36).

5. Vorrichtung (12) nach Anspruch 4, wobei der RFID-Sensor (48) zum Detektieren der Anwesenheit eines RFID-Tags (36) ein Ausgangssignal vom Typ EIN/AUS bereitstellt, um die Anwesenheit/Abwesenheit des RFID-Tags (36) zu detektieren.

6. Vorrichtung (12) nach Anspruch 4 oder 5, wobei der RFID-Sensor (48) eine Detektionsantenne (52), die konfiguriert ist, das RFID-Tag (36) zu detektieren, und eine elektronische Detektionsschaltung (56) umfasst, die konfiguriert ist, die Detektionsantenne (52) auf einer Betriebsfrequenz des RFID-Tags (36) zu betreiben.

7. Vorrichtung (12) nach Anspruch 6, wobei die Detektionsantenne (52) und die elektronische Detektionsschaltung (56) aus zwei separaten PCBs bestehen, die mittels eines Kabels oder Platine-zu-Platine-Verbindern miteinander verbunden sind.

8. Vorrichtung (12) nach Anspruch 6, wobei der RFID-Sensor (48) eine Detektionsantenne (52) und eine elektronische Detektionsschaltung (56) umfasst, die miteinander integriert und in einer einzigen PCB ausgeführt sind.

9. Vorrichtung (12) nach einem der Ansprüche 6 bis 8, wobei die Detektionsantenne (52) 'n' Spulen (60) umfasst, die auf einer PCB oder einer Rolle angeordnet und konfiguriert sind, den Umfang eines Detektionsbereichs (64) zu definieren, innerhalb dessen der Durchgang und/oder die Anwesenheit des RFID-Tags (36) und der zugehörigen Spulenhalterplatte 20 detektiert wird/werden.

10. Vorrichtung (12) nach Anspruch 9, wobei die Spulen (60) aus Kupfer und/oder Aluminium bestehen.

11. Vorrichtung (12) nach einem der Ansprüche 4 bis 10, wobei der RFID-Sensor (48) konfiguriert ist, die in dem RFID-Tag (36) der Spulenhalterplatte (20) enthaltenen Informationen zu lesen und/oder zu schreiben, und wobei das RFID-Tag (36) vom wiederbeschreibbaren Typ ist.

12. Automatische Wickelmaschine (4), umfassend zumindest eine Wickeleinheit oder einen Wickelkopf (8), die konfiguriert ist, Spulen (12) zu wickeln, die ihr von zumindest einer Spulenhalterplatte (20) nach Anspruch 1 zugeführt werden, und zumindest eine Vorrichtung zur Anwesenheitsdetektion und/oder Verfolgung einer Spule nach einem der Ansprüche 4 bis 11.

13. Automatische Wickelmaschine (4) nach Anspruch 12, umfassend eine Mehrzahl von RFID-Sensoren (48), die in separaten Arbeitsbereichen der Wickelmaschine (4) angeordnet sind, um den Durchgang von zumindest einer Spulenhalterplatte (20) durch die Arbeitsbereiche zu verfolgen.

14. Ringspinnmaschine, umfassend zumindest einen Spinnkopf und RFID-Sensoren zum Verfolgen des Durchgangs und Zuführen von Spulenhalterplatten (20) nach Anspruch 1 und zumindest eine Vorrichtung zur Anwesenheitsdetektion und/oder Verfolgung einer Spule nach einem der Ansprüche 4 bis 11.

## Revendications

1. Plaque porte-bobine (20) pour machines à bobiner automatiques (4) ou métiers à filer à anneaux, comprenant :
- un corps de plaque (24) avec une base (26) et une broche centrale (28) ayant un premier trou traversant central (32) configuré pour loger et supporter une bobine associable (12),
- au moins une étiquette RIFD (36) associée au corps de plaque (24), afin de permettre à une position et/ou un état de la bobine (12) d'être suivis, dans laquelle ladite étiquette RIFD (36) contient des informations pour l'identification de la bobine associable (12),
**caractérisée en ce que** ladite étiquette RFID (36) est fixée sur la plaque porte-bobine (20) au moyen d'un capuchon de fixation (40) associé au corps de plaque (24) dans laquelle ledit capuchon de fixation (40) est associé à la base (26) du corps de plaque (24) et est doté d'un second trou traversant (44) coaxial avec ladite broche centrale (28) et en communication fluidique avec ledit premier trou traversant central (32).

2. Procédé pour détecter la présence et/ou suivre au moins une bobine (12) supportée par une plaque porte-bobine (20), comprenant les étapes de :
- fournir une bobine (12) sur une plaque porte-bobine (20) selon la revendication 1,
- fournir, dans une zone de détection (64), au moins un capteur RFID (48) pour détecter et suivre la présence et l'état de la plaque porte-bobine (20) par lecture de ladite étiquette RIFD (36),
- détecter la présence et/ou le passage de ladite plaque porte-bobine (20), dans une machine à bobiner (4) ou dans un métier à filer à anneaux, au moyen dudit au moins un capteur RIFD (48) qui détecte la présence de ladite étiquette RIFD (36) lorsqu'elle passe à proximité du capteur RIFD (48).

3. Procédé de détection de la présence et/ou de suivi d'au moins une bobine (12) supportée par une plaque porte-bobine (20) selon la revendication 2, comprenant les étapes de :
- fournir au moins une étiquette RFID (36) du type réinscriptible,
- fournir au moins un capteur RFID (48) apte à lire et/ou écrire les informations contenues dans l'étiquette RFID (36) de la plaque porte-bobine (20),
- lire et mettre à jour des informations de ladite étiquette RFID (36), au moyen dudit au moins un capteur RFID (48), lors du passage de l'étiquette RFID (36) à travers différentes zones de détection (64) de la machine à bobiner (4) ou du métier à filer à anneaux surveillées par au moins un capteur RFID (48).

4. Appareil pour une détection de présence et/ou un suivi de bobine (12) dans une machine à bobiner (4) ou un métier à filer à anneaux comprenant au moins une plaque porte-bobine (20) avec une étiquette RIFD (36) selon la revendication 1 et au moins un capteur RFID (48) pour détecter et suivre la présence et le statut de la plaque porte-bobine (20) par lecture de ladite étiquette RFID (36).

5. Appareil (12) selon la revendication 4, dans lequel ledit capteur RFID (48) destiné à détecter la présence d'une étiquette RFID (36) présente un signal de sortie de type MARCHE/ARRÊT afin de détecter la présence/absence de l'étiquette RFID (36).

6. Appareil (12) selon la revendication 4 ou 5, dans lequel ledit capteur RFID (48) comprend une antenne de détection (52), configurée pour détecter ladite étiquette RFID (36), et un circuit de détection électronique (56) configuré pour alimenter l'antenne de détection (52) sur une fréquence de fonctionnement de ladite étiquette RFID (36).

7. Appareil (12) selon la revendication 6, dans lequel ladite antenne de détection (52) et ledit circuit de détection électronique (56) sont faits de deux cartes de circuit imprimé distinctes interconnectées l'une à l'autre au moyen d'un câble ou de connecteurs carte à carte.

8. Appareil (12) selon la revendication 6, dans lequel le capteur RFID (48) comprend une antenne de détection (52) et un circuit de détection électronique (56) intégrés l'un avec l'autre et formés en une seule carte de circuit imprimé.

9. Appareil (12) selon l'une quelconque des revendications 6 à 8, dans lequel ladite antenne de détection (52) comprend n bobines (60) agencées sur une carte de circuit imprimé ou sur un rouleau, configurées pour définir le périmètre d'une zone de détection (64) à l'intérieur de laquelle le passage et/ou la présence de ladite étiquette RFID (36) et de la plaque porte-bobine (20) associée est détecté(e).

10. Appareil (12) selon la revendication 9, dans lequel lesdites bobines (60) sont faites de cuivre et/ou d'aluminium.

11. Appareil (12) selon l'une quelconque des revendications 4 à 10, dans lequel ledit capteur RFID (48) est configuré pour lire et/ou écrire les informations contenues dans l'étiquette RFID (36) de la plaque porte-bobine (20) et dans lequel ladite étiquette RFID (36) est du type réinscriptible.

12. Machine à bobiner automatique (4) comprenant au moins une unité de bobinage ou tête de bobinage (8), configurée pour bobiner des bobines (12) acheminées vers celle-ci par au moins une plaque porte-bobine (20) selon la revendication 1, et au moins un appareil de détection de présence et/ou de suivi d'une bobine selon l'une quelconque des revendications 4 à 11.

13. Machine à bobiner automatique (4) selon la revendication 12, comprenant une pluralité de capteurs RFID (48) agencés dans des zones de travail distinctes de ladite machine à bobiner (4) de sorte à suivre le passage d'au moins une plaque porte-bobine (20) à travers lesdites zones de travail.

14. Métier à filer à anneaux comprenant au moins une tête de filage et des capteurs RFID pour suivre le passage et l'acheminement des plaques porte-bobine (20) selon la revendication 1, et au moins un appareil de détection de présence et/ou de suivi d'une bobine selon l'une quelconque des revendications 4 à 11.
